# EUROPÄISCHE PATENTSCHRIFT

(11) **EP 4 319 955 B1**
(45) Veröffentlichungstag und Bekanntmachung des Hinweises auf die Patenterteilung: **21.08.2024**
(21) Anmeldenummer: 22773602.2
(22) Anmeldetag: 01.09.2022
(51) Int. Cl.: B29C 45/80, G05B 19/4061, G05B 19/4069, B25J 9/16, B29C 45/42

(54) **VERFAHREN, MASCHINENSTEUERUNG UND COMPUTERPROGRAMMPRODUKT ZUR BESTIMMUNG EINES PFADES FÜR EINE AUTONAVIGATION**
METHOD, MACHINE CONTROL AND COMPUTER-PROGRAM PRODUCT FOR DETERMINING A PATH FOR AUTONAVIGATION
PROCÉDÉ, COMMANDE DE MACHINE ET PRODUIT PROGRAMME INFORMATIQUE PERMETTANT DE DÉTERMINER UN TRAJET D'AUTO-NAVIGATION

(30) Priorität: 01.09.2021 DE 102021122606
(43) Veröffentlichungstag der Anmeldung: 14.02.2024
(73) Patentinhaber: Arburg GmbH + Co KG, 72290 Loßburg (DE)
(72) Erfinder: FAULHABER, Werner, 72290 Loßburg Wittendorf (DE); PETERS, Jürgen, 77761 Schiltach (DE)
(74) Vertreter: RPK Patenanwälte Reinhardt und Kaufmann Partnerschaft mbB (Pforzheim)
(86) Internationale Anmeldenummer: PCT/EP2022/074294
(87) Internationale Veröffentlichungsnummer: WO 2023/031320

(56) Entgegenhaltungen:
- EP-A1- 2 853 354
- WO-A1-2020/158320
- US-A1- 2004 232 866
- US-A1- 2011 153 080
- US-A1- 2022 080 582
- KUNZ T ET AL: "Real-time path planning for a robot arm in changing environments", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 5906 - 5911, XP031920895, ISBN: 978-1-4244-6674-0, DOI: 10.1109/IROS.2010.5653275

## Beschreibung

Die Erfindung betrifft ein Verfahren zur Bestimmung wenigstens eines Teils eines Pfads zur Verbindung wenigstens eines Startpunkts mit wenigstens einem Zielpunkt in einem Raum für wenigstens eine Autonavigation vom Start- zum Zielpunkt, beispielsweise zur Entnahme, Umsetzung und/oder Ablage eines Formteils, wenigstens einer bewegbaren Komponente durch den Raum an einer Maschine, insbesondere einer Spritzgießmaschine zur Verarbeitung von Kunststoffen und anderer plastifizierbarer Massen oder einer 3D-Druckmaschine nach dem Oberbegriff des Anspruchs 1, eine Maschinensteuerung nach dem Oberbegriff des Anspruchs 10 sowie ein Computerprogrammprodukt nach dem Oberbegriff des Anspruchs 11.

Für die Erläuterung der Erfindung werden zunächst einige Begriffe wie folgt definiert.

Unter einer "Achse" werden im Rahmen dieser Anmeldung bewegbare Teile z.B. von Maschinen, Anlagen, Anlagenteilen und/oder Peripheriegeräten verstanden, welche sich beispielsweise über einen Antrieb z.B. einen Motor ansteuern lassen. Für das Beispiel einer Spritzgießmaschine wäre eine Achse z.B. die Spindel eines Spindelsystems.

Unter einer "Maschine" werden im Rahmen dieser Anmeldung zumindest all die Teile verstanden, die strukturell zum Betrieb einer Maschine erforderlich sind, wie z.B. an einer Spritzgießmaschine die Formschließeinheit mit darin aufgenommener Spritzgießform, die Spritzgießeinheit, der Maschinenfuß sowie die zugehörigen Antriebe. Relevant für die Autonavigation ist zumindest der Bereich des Raums, in dem die Maschine oder deren Teile mit einer bewegbaren Komponente z.B. eines Peripheriegeräts kollidieren können. Ein konkreter Fall ist dabei z.B. ein Roboterarm mit Greifer, der sich im Formspannraum zwischen den geöffneten Formträgern der Formschließeinheit bewegt. Der Roboterarm und/oder der Greifer können verschiedene Bewegungen ausführen, wie z.B. Kipp-, Schwenk-, Drehbewegungen. Durch diese Bewegungen kann der Vektor des Roboterarms und/oder des Greifers geändert werden. Die Maschine kann wenigstens ein Maschinenteil aufweisen, wie z.B. ein Werkzeug, ein Formnest, ein Formteil, einen Anguss, eine bewegliche Platte, eine stationäre Platte und/oder eine Einspritzeinheit. Weiter kann die Maschine noch weitere Maschinenteile und/oder Komponenten aufweisen. Auch diese Maschinenteile können sich bewegen und können bevorzugt ebenfalls mit dem vorgestellten Verfahren im Raum autonavigiert werden. Das Maschinenteil wird dann bevorzugt entlang eines Pfades autonavigiert, welcher mittels des Algorithmus berechnet wurde, sodass es zu keiner Kollision mit anderen Maschinenteilen, bewegbaren Komponenten und/oder der Maschine kommt.

Wenn im Folgenden von der Maschine gesprochen wird, sind immer die Maschine sowie gegebenenfalls die Maschinenteile der Maschine gemeint.

Unter einer "bewegbaren Komponente" wird im Rahmen dieser Anmeldung ein relativ zur Maschine bewegbares Element wie z.B. ein Peripheriegerät verstanden. Dabei kann es sich um einen Roboterarm, Greifer, Roboter, Auswerfer oder auch andere bewegbare Komponenten eines Peripheriegeräts als auch der Maschine handeln, die sich im Raum bewegen, so dass eine Kollision mit der Maschine zu vermeiden ist, insbesondere wenn sich auch die Maschine und/oder Maschinenteile bewegen.

In einem Spritzgießprozess laufen heutzutage viele bzw. alle Vorgänge automatisiert ab. Nicht nur erfolgt meist die komplette Steuerung einer Spritzgießmaschine vollständig automatisiert, wie beispielsweise das Schließen der Werkzeugplatten, die Beaufschlagung des Druckes und das Öffnen der Werkzeugplatten, sondern auch das Entnehmen, das Umsetzen und/oder das Ablegen eines Formteils beispielsweise mittels eines Roboters. Oft befinden sich im Maschinen- und/oder Werkzeugraum mehrere Achsen, z.B. Tauchachsen, beispielsweise von Peripheriegeräten, z.B. eines Roboters oder eines Robotergreifers, sodass eine Beeinträchtigung oder Kollision der Achsen während des Spritzgießprozesses, z.B. bei der Entnahme des Formteils untereinander stattfinden kann. Für eine vorteilhaft effiziente Produktivität ist eine möglichst kurze Zykluszeit wünschenswert, welche z.B. auch durch die Entnahmegeschwindigkeit des Formteils beispielsweise durch das Peripheriegerät bedingt ist.

Bekannt sind Systeme in kunststoffverarbeitenden Maschinen und Anlagen, bei denen z.B. Roboterabläufe interaktiv erstellt werden können. Beispielsweise können durch sogenannte Teachfunktionen Ablaufpositionen, z.B. Punkte einer Bahn eingegeben bzw. "geteacht" und somit automatisch beispielsweise einer Roboter-Ablaufsteuerung eingegeben werden (siehe z.B. WO 2009/080296 A1).

Ebenfalls bekannt sind Systeme, bei denen im Ablauf Hüllkörper-Geometrieinformationen von Roboter und Werkzeug dazu verwendet werden, quasi statische Kollisionsprüfungen (zum Beispiel des Roboterarms bzw. Robotergreifers) mit der Maschine an den End- und Teachpunkten durchzuführen.

Aus der DE 10 2012 103 830 A1 ist ein Verfahren zur Verhinderung von gegenseitiger Blockierung eines Paares von Robotern offenbart, welche einen gemeinsamen Arbeitsbereich besitzen. Jeder Roboter wird durch ein zugeordnetes Programm gesteuert. Die Roboter besetzen während gleichzeitiger Ausführung der Programme einen Abschnitt eines gemeinsamen Arbeitsplatzbereichs. Es wird ein Störbereich gekennzeichnet, in dem sich die Abschnitte des gemeinsamen Arbeitsbereichs überdecken. Der Störbereich wird analysiert und es wird gekennzeichnet, wo eine gegenseitige Blockierung der Roboter auftreten kann. Zur Vermeidung der Blockierung wird eine Anweisung ausgeführt, welche zumindest eine Bedingung der gegenseitigen Blockierung während einer Ausführung der Programme vermeidet.

In der DE 690 27 634 T2 ist ein Kollisionserkennungsverfahren für eine Mehrroboteranordnung mit mindestens zwei Elementen offenbart. Für die Kollisionserkennung wird das Antikollisionsproblem in eine Kollisionserkennungsphase und eine Behebungs-(Ausweichmanöver-)Phase aufgespalten. Durch weiteres Zerteilen des 3D-Kollisionserkennungsproblems in eine 2D-XY-Erkennung und einen 1D-Höhenvergleich kann das Problem weiter vereinfacht werden.

Zur Bestimmung von zeitgünstigen kollisionsfreien Wegen wird in der EP 1 672 449 A1 einer Maschinensteuerung ein Datensatz zur Verfügung gestellt, der in jedem diskretisierten Koordinatenpunkt sowie für jede Kombination der diskretisierten Werkzeugmodelle und Werkstückmodelle einen Kollisionsparameter 0 oder 1 aufweist. Der Kollisionsparameter zeigt an, ob die dem entsprechenden Koordinatenpunkt zugeordnete Konstellation, das heißt Relativposition von Werkstück und Werkzeug, eine Kollision oder räumliche Überschneidung des Werkzeugs und des Werkstücks zur Folge hat oder nicht. Dabei bildet der Datensatz eine Look-Up-Tabelle, die zur Überprüfung von gegebenen Pfaden oder zum Strecken oder schrittweisen Aufbau von Pfaden genutzt werden kann.

In der WO 2009/024783 A1 ist ein computerimplementiertes Verfahren offenbart um eine Bewegung zwischen einem Bauteil und einem Gerät, welches mit dem Bauteil interagiert, zu bestimmen. Es werden geometrische Daten bezüglich des Bauteils und des Geräts empfangen und aus den geometrischen Daten wird bestimmt, wie das Gerät und das Bauteil relativ zueinander bewegt werden können, wobei Optimierungskriterien verwendet werden. In einem Ausführungsbeispiel wird ein Modell eines Gegenstands, eines Turbinenblatts geladen und es wird eine Oberfläche des Gegenstands ausgewählt, auf der mehrere Punkte generiert werden. Die Punkte werden dann vom Messgerät wegoptimiert angefahren.

In der US 2017/0090454 A1 ist ein Verfahren zur Generierung von Positionsfahrtdaten für eine CNC-Maschine offenbart. Optimierte Positionswege werden auf der Grundlage der Maschinenkinematik, der Verfahrensgrenzen der Maschinenachsen, der Geschwindigkeits- und Beschleunigungsgrenzen der Maschinenachsen und der Positionier-Methoden der Maschine erstellt, wobei eine Vielzahl möglicher Pfade zum Neupositionieren eines Werkzeugs von einer ersten zu einer zweiten Konfiguration bestimmt wird.

Die DE 10 2004 027 944 A1 offenbart ein Verfahren zum Schützen von mindestens zwei Robotern gegen Kollisionen, bei denen Bewegungen eines Roboters automatisch auf mögliche Kollisionen geprüft werden und automatisch Verriegelungen in den Bewegungsablauf eingefügt werden.

In der US 2011/0153080 A1 ist ein Verfahren zur Planung einer Roboterbahn offenbart, wobei eine Vielzahl von Zonen jedem Standort in der Roboterbahn zugeordnet werden. Für jeden Standort wird die Bewegung des Roboters simuliert und bestimmt, ob in der simulierten Bewegung des Roboters eine Kollision aufgetreten ist. Falls eine Kollision aufgetreten ist, wird der damit verbundene Standort identifiziert und eine neue Zone für den identifizierten Ort ausgewählt, während im Anschluss das Simulieren der Bewegung des Roboters wiederholt wird.

In dem Dokument: Kunz T. et al: "Real-time path planning for a robot arm in changing environments", INTELLIGENT ROBOTS AND SYSTEMS (IROS), 2010 IEEE/RSJ INTERNATIONAL CONFERENCE ON, IEEE, PISCATAWAY, NJ, USA, 18. Oktober 2010 (2010-10-18), Seiten 5906-5911, XP031920895, DOI: 10.1109/IROS.2010.5653275 ISBN: 978-1-4244-6674-0 ist ein Verfahren zur Echtzeitplanung einer Bewegung eines Roboterarms in einer sich ändernden Umgebung offenbart. Ein Algorithmus ist auf einem Roboter implementiert, wobei eine Kamera die Umgebung detektiert und eine Planung eines kollisionsfreien Pfades in unter 100ms ermöglicht.

Die EP 2 853 354 A1 offenbart eine Steuereinrichtung einer Maschine mit mehreren lagegeregelten Achsen, die gemäß einem Teileprogramm angesteuert werden. Das Teileprogramm definiert eine Bahn, entlang der der Endeffektor verfahren werden soll, und enthält für die lagegeregelten Achsen eine Sequenz von Lagesollwerten. Die Lagesollwerte legen zu jedem Zeitpunkt eine Lage und eine Orientierung des Endeffektors im dreidimensionalen geometrischen Raum fest. Die Maschine wird in einem Modell modelliert und die Steuereinrichtung prüft, ob das Verfahren des Endeffektors entlang der durch das Teileprogramm definierten Bahn kollisionsfrei möglich ist. Wird eine Kollision erkannt, führt eine Steuereinrichtung eine Fehlerbehandlung durch.

In der US 2004/0232866 A1 sind ein oder mehrere Maschinenelemente einer Maschine durch einen oder mehrere lagegeregelte Antriebe relativ zu einer Basis bewegbar. Der Ort des Maschinenelements und die Steuerbefehle für die Antriebe werden an eine Überwachungseinheit übermittelt, welche basierend auf den Steuerbefehlen ein Geschwindigkeitsprofil für das Maschinenelement bestimmt. Anhand des Geschwindigkeitsprofils bestimmt die Überwachungseinheit weiter eine Zeitabhängigkeit der Volumina, welche die Maschinenelemente vor und während der Ausführung der Steuerbefehle einnehmen. Weiter erfolgt eine Überwachung zwischen dem Maschinenelement und zumindest der Basis anhand der Volumina.

Die WO 2020/158320 A1 offenbart ein Steuersystem sowie mehrere Roboter. Ein zweiter Roboter weist eine Trajektorienberechnungseinheit auf, die eine Bahn des zweiten Roboters berechnet, um einem ersten Roboter auszuweichen, wenn bestimmt ist, dass der erste Roboter und der zweite Roboter kollidieren.

Die beschriebenen Funktionen erleichtern heute bereits das Programmieren von Roboterabläufen und helfen, Fehler zu vermeiden. Alle zuvor beschriebenen, einzelnen unterstützenden Systeme haben jedoch das Problem, dass diese unvollständig und in gewissen Grenzen ungenau sind. Daher ist beim Programmieren immer noch die Interaktion mit dem Bediener notwendig. Das bedeutet zudem, dass Schäden durch Kollisionen nicht vollständig verhindert werden können.

Es soll nun nicht einfach durch Kombination der verschiedenen beschriebenen Einzelfunktionen eine Verbesserung der Roboterabläufe erreicht werden, sondern durch eine völlig neue Betrachtung die Voraussetzung zu einer dynamischen, kollisionsfreien Autonavigation geschaffen werden.

Ausgehend von diesem Stand der Technik liegt der vorliegenden Erfindung die Aufgabe zugrunde, ein Verfahren zur Bestimmung wenigstens eines Teils eines Pfads für wenigstens eine Autonavigation bereitzustellen, welches den Bediener bei Anpassungen des Maschinenzyklus unterstützt und in Bezug auf Fahrweg, Zykluszeit, Prozesssicherheit, Energie sowie Verschleiß optimiert ist.

Diese Aufgabe wird durch ein Verfahren zur Bestimmung wenigstens eines Teils eines Pfades für wenigstens eine Autonavigation mit den Merkmalen des Anspruches 1, eine Maschinensteuerung mit den Merkmalen des Anspruches 10 sowie durch ein Computerprogrammprodukt mit den Merkmalen des Anspruches 11 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das Verfahren zur Bestimmung wenigstens eines Teils eines Pfades zur Verbindung wenigstens eines Startpunkts mit wenigstens einem Zielpunkt in einem Raum für wenigstens eine Autonavigation wenigstens einer bewegbaren Komponente z.B. eines Peripheriegeräts, beispielsweise eines Roboters oder eines Robotergreifers, durch den Raum an einer Maschine, die eine Spritzgießmaschine zur Verarbeitung von Kunststoffen und anderer plastifizierbarer Massen oder eine 3D-Druckmaschine ist, die zur Entnahme, Umsetzung und/oder Ablage eines Formteils eingerichtet ist, umfasst die folgenden Schritte.

Die Maschine, wie eingangs definiert, kann wenigstens ein Maschinenteil aufweisen, wie z.B. ein Werkzeug, ein Formnest, ein Formteil, einen Anguss, eine bewegliche Platte, eine stationäre Platte, und/oder eine Einspritzeinheit. Weiter kann die Maschine noch weitere Maschinenteile und/oder Komponenten beispielsweise von einer Spritzgießmaschine oder einer 3D-Druckmaschine aufweisen. Die Maschinenteile können sich bewegen und können bevorzugt ebenfalls mit dem vorgestellten Verfahren im Raum autonavigiert werden. Das Maschinenteil wird dann bevorzugt entlang des Pfades autonavigiert, welche mittels des Algorithmus berechnet wurde, sodass es zu keiner Kollision mit anderen Maschinenteilen, Peripheriegeräten und/oder der Maschine kommt.

Wenn im Folgenden von der Maschine gesprochen wird sind immer die Maschine sowie gegebenenfalls die Maschinenteile der Maschine gemeint.

Bei einer "bewegbaren Komponente" handelt es sich um ein relativ zur Maschine bewegbares Element wie z.B. ein Peripheriegerät. Dabei kann es sich z.B. um Greifer, Roboter, Auswerfer oder auch andere bewegbare Komponenten z.B. eines Peripheriegeräts als auch der Maschine handeln, die sich im Raum bewegen, so dass eine Kollision mit der Maschine zu vermeiden ist, insbesondere wenn sich auch die Maschine bewegt.

Zunächst wird wenigstens ein Modell, z.B. ein digitales Modell der wenigstens einen bewegbaren Komponente, z.B. eines Peripheriegeräts, und der Maschine und des Formteils bereitgestellt. Je nachdem, ob die Maschine Maschinenteile aufweist, können auch bevorzugt für die Maschinenteile entsprechende Modelle bereitgestellt werden. Beispielsweise kann das Modell als Datei einem Computer, einem Programm oder einer Steuerung bereitgestellt werden. Es ist auch möglich, dass das Modell über ein Netzwerk bereitgestellt wird oder bereits auf der Maschine vorhanden ist. Das Modell kann Informationen über die Geometrie der bewegbaren Komponente und/oder der Maschine aufweisen. Die Geometrie des Modells kann mittels Geometriemodellen, wie beispielsweise Collada beschrieben werden.

In einem weiteren Schritt werden Geometrieinformationen des Raums und der wenigstens einen bewegbaren Komponente und der Maschine und des Formteils erfasst. Je nachdem, ob die Maschine Maschinenteile aufweist, können bevorzugt auch für die Maschinenteile entsprechende Geometrieinformationen erfasst werden. Die Geometrieinformationen können z.B. aus dem Modell entnommen werden bzw. sind im Modell enthalten. Auch kann z.B. die Position der beweglichen Platte anhand eines der Maschinensteuerung bekannten Istwertes der Plattenlage zu jedem Zeitpunkt eindeutig bestimmt werden. So ergeben sich beispielsweise die geometrischen Abmessungen in Länge, Breite und Höhe der einzelnen bewegbaren Komponenten, der Maschine und gegebenenfalls der Maschinenteile. Ferner ist es bevorzugt denkbar, die Geometrieinformationen anhand von Sensoren zu erfassen.

In einem nächsten Schritt wird eine aktuelle Lage der wenigstens einen bewegbaren Komponente und der Maschine und des Formteils im Raum bestimmt. Je nachdem, ob die Maschine Maschinenteile aufweist, kann bevorzugt auch eine aktuelle Lage der Maschinenteile im Raum bestimmt werden. Mit der Lage sind beispielsweise die Position und/oder die Ausrichtung gemeint. Beispielsweise kann mit einem Winkel bezüglich der Nulllage die Lage einer Achse im Raum, z.B. in einem kartesischen Koordinatensystem eindeutig bestimmt werden. Es ist somit auch möglich, beispielsweise eine Orientierung einer Achse beispielsweise von einem Roboter im Raum zu erfassen. Auch hier kann die aktuelle Lage bevorzugt anhand von Sensoren erfasst werden.

Die Geometrieinformationen und die aktuelle Lage der wenigstens einen bewegbaren Komponente und der Maschine und des Formteils im Raum werden beispielsweise mit einem Computer oder einer Maschinensteuerung zueinander in Beziehung gesetzt zur Erzeugung wenigstens eines Graphen des Raums. Je nachdem, ob die Maschine Maschinenteile aufweist, können bevorzugt auch die Geometrieinformationen und die aktuelle Lage der Maschinenteile mit den Geometrieinformationen und der aktuellen Lage der wenigstens einen bewegbaren Komponente und der Maschine zur Erzeugung eines Graphen im Raum in Beziehung gesetzt werden. Mit den Geometrieinformationen und der aktuellen Lage ist die Anordnung von bewegbaren Komponenten wie z.B. Peripheriegeräten und der Maschine sowie gegebenenfalls der Maschinenteile im Raum bestimmt, sodass eine "Karte des Raums" als Graph erzeugt werden kann. Die bewegbaren Komponenten, die Maschine und gegebenenfalls die Maschinenteile können im Graph beispielsweise als ein Hindernis dargestellt werden.

In einem weiteren Schritt erfolgt das Berechnen des Pfades unter Anwendung wenigstens eines Algorithmus auf den Graphen, wobei für das Berechnen des Pfades zusätzlich wenigstens eine Optimierung durchgeführt wird.

In einem weiteren Schritt wird wenigstens eine Kollisionsprüfung entlang des Pfades durchgeführt zwischen der wenigstens einen bewegbaren Komponente, der Maschine und des Formteils. Je nachdem, ob die Maschine Maschinenteile aufweist, können bevorzugt auch die Maschinenteile bei der Kollisionsprüfung berücksichtigt werden. Beispielsweise kann während der Entnahme des Formteils eine Kollision zwischen einem Peripheriegerät und der Maschine bzw. Maschinenteilen auftreten. Die Kollisionsprüfung erfolgt z.B. entlang des Pfades, indem überprüft wird, ob entlang des Pfades ein Hindernis liegt.

Die Kollisionsprüfung erfolgt in Echtzeit. Ergibt die Kollisionsprüfung, dass sich ein Hindernis entlang des Pfades befindet, wird beispielsweise nach einer Bewegungsanweisung an die bewegbare Komponente, an die Maschine und/oder gegebenenfalls an das Maschinenteil eine neue Berechnung des Pfades durchgeführt. Ergibt die Kollisionsprüfung, dass entlang des Pfades kein Hindernis vorliegt, wird in einem weiteren Schritt entlang des Pfades die wenigstens eine bewegbare Komponente autonavigiert, wobei sich die wenigstens eine bewegbare Komponente relativ zu der Maschine bewegt.

Während eines Spritzgießprozesses bewegen sich in aller Regel die bewegbaren Komponenten wie Peripheriegeräte, die Maschine und/oder gegebenenfalls die Maschinenteile wie z.B. Teile einer Spritzgießform relativ zueinander, sodass der Pfad für die Autonavigation angepasst werden muss. Für eine vorteilhaft erhöhte Sicherheit und Bedienerfreundlichkeit wird der Algorithmus unter dynamischer Änderung des Graphen infolge von Bewegungen der wenigstens einen bewegbaren Komponente und/oder der Maschine und/oder des Formteils angewandt. Je nachdem, ob die Maschine Maschinenteile aufweist, kann bevorzugt der Algorithmus unter dynamischer Änderung der Maschinenteile angewandt werden. Bewegen sich z.B. die bewegbare Komponente, die Maschine und/oder gegebenenfalls das Maschinenteil so, dass sich der Graph so verändert, dass entlang des aktuellen Pfads ein Hindernis liegt, wird die Bewegung der bewegbaren Komponente, der Maschine und/oder gegebenenfalls des Maschinenteils auf dem aktuellen Pfad mit Hindernis gestoppt und auf einem neuen berechneten Pfad fortgesetzt. Mit jeder Bewegung kann sich also der Pfad auf der "Karte" ändern, die durch die anderen vorhandenen Elemente beschrieben wird und auf der die bewegbare Komponente bewegbar ist. Gleiches gilt auch für die bei einem 3D-Druckprozess verwendeten Elemente wie z.B. Materialzuführeinheit, Austragskopf, Faserzuführeinheit, Bauträger, herzustellendes Objekt.

Da während eines Produktionsprozesses unvorhergesehene Ereignisse eintreten können, wird das Verfahren bei einer Änderung im Produktionsablauf in Echtzeit simuliert und der Algorithmus reagiert auf veränderte Positionen und/oder Geschwindigkeiten der wenigstens einen bewegbaren Komponente wie z.B. eines Peripheriegeräts und/oder der Maschine und/oder des Formteils, indem wenigstens eine weitere Kollisionsprüfung durchgeführt und wenigstens ein neuer Pfad berechnet wird und der Algorithmus erneut angewandt wird, wobei als Startpunkt eine aktuelle Istposition verwendet wird, wobei die Berechnung, die Kollisionsprüfung und das Autonavigieren vorausschauend erfolgen. D.h., bei einer Bewegung kann es z.B. sein, dass zwar während einer bestimmten Zeitspanne ein Hindernis entlang des Pfades liegt, jedoch dieses Hindernis aufgrund von Bewegungen der bewegbaren Komponente, der Maschine, des Formteils und/oder gegebenenfalls des Maschinenteils wieder vom Pfad verschwindet, bevor die bewegbare Komponente, die Maschine, das Formteil und/oder gegebenenfalls das Maschinenteil auf das Hindernis stoßen bzw. mit diesem kollidieren. Vorteilhaft muss so nicht die Richtung gewechselt werden, wodurch beispielsweise Erschütterungen aufgrund von Richtungsänderungen vermieden werden. Je nachdem, ob die Maschine Maschinenteile aufweist, kann bevorzugt der Algorithmus auch auf veränderte Positionen und/oder Geschwindigkeiten der Maschinenteile reagieren, indem wenigstens eine weitere Kollisionsprüfung durchgeführt und/oder wenigstens ein neuer Pfad berechnet wird.

Vorteilhaft wird so der Bediener bei Anpassung des Maschinenzyklus unterstützt, wobei sich ebenfalls eine Verbesserung in Bezug auf Fahrweg, Zykluszeit, Prozesssicherheit, Energie und Verschleiß ergibt. Ebenfalls wird mit möglichst geringer Rechenzeit und Speicherbedarf der kürzeste/schnellste Fahrweg ermittelt. Weiter vorteilhaft erfolgt so ein kollisionsfreier Fahrweg, für den eine manuelle Programmierung und Parametrierung mittels der Maschinen- und/oder Robotersteuerung durch den Einrichter nicht nötig ist oder weitestgehend automatisiert abläuft.

Vorteilhaft kann so wie bei einer Autonavigation im Straßenverkehr auf Veränderungen reagiert werden mit dem Unterschied, dass sich im Gegensatz zum Straßenverkehr hier der Graph, d.h. übertragen die Karte, ändert. Der hinterlegte Algorithmus ist z.B. in der Lage, auf veränderte Lageistwerte und Achsgeschwindigkeiten zu reagieren. Der Bediener muss z.B. bei Anpassungen des Maschinenzyklus keinerlei Rücksicht mehr auf das Robotersystem nehmen. Dessen Abläufe werden automatisch und dynamisch angepasst. Dies kann im laufenden Zyklus geschehen, denn aufgrund der hohen Performance des Verfahrens kann die aktuelle Istposition als neuer Startwert und das geänderte Hindernis (z.B. bewegte Werkzeughälfte) zur Ermittlung des optimalen Pfades zum Zielpunkt erneut angepasst werden.

So kann bei einer für die Autonavigation relevanten Parameteränderung im laufenden Zyklus der Pfad angepasst werden. Beispielsweise registriert das Verfahren, ob während der Autonavigation eine Änderung des Graphen beispielsweise eine Änderung der Hindernisse vorliegt.

Befindet sich aufgrund der Änderung ein Hindernis auf dem Pfad, wird ausgehend von der aktuellen Position der Algorithmus erneut angewandt und ein neuer Pfad berechnet. Beeinträchtigt das Hindernis den aktuellen Pfad nicht, erfolgt keine neue Berechnung.

Für eine vorteilhaft genaue und präzise Navigation wird bevorzugt jeweils wenigstens ein Kontaktpunkt von wenigstens einer bewegbaren Komponente und der Maschine in Bezug auf dessen Lage im Raum bereitgestellt, wobei die Kontaktpunkte miteinander für das Bereitstellen des Modells der wenigstens einen bewegbaren Komponente und der Maschine logisch gekoppelt werden. Je nachdem, ob die Maschine Maschinenteile aufweist, kann bevorzugt jeweils wenigstens ein Kontaktpunkt der Maschinenteile bereitgestellt und mit anderen Kontaktpunkten gekoppelt werden. Beispielsweise kann das Spritzgießwerkzeug an der Anbaufläche zur Form durch mindestens einen Kontaktpunkt in Bezug auf Position und Lage im Raum, ergänzt durch einen Winkel der Nulllage, eindeutig beschrieben werden, an den z.B. das nächste Maschinenteil und/oder ein Peripheriegerät automatisch ankoppeln kann. Dieser Punkt ist logisch mit dem aktuellen Istwert zum Beispiel der beweglichen Platte gekoppelt und wird automatisch nachgeführt. Dieser Kontaktpunkt kann in Analogie zur Elektrotechnik beispielsweise als "socket" bezeichnet werden. Ebenfalls kann z.B. die feste Platte über wenigstens einen Punkt in Bezug auf Position und Lage und Winkel im Raum verfügen, welcher im Fall der festen Platte statisch ist.

Auch kann beispielsweise ein Roboter als bewegbare Komponente in seiner Geometrie als Modell und dessen Lage zur Maschine bekannt sein. Im einfachsten Fall ist der Roboter mit seinem Sockel oder Fuß über die vorher beschriebene Funktion "plug" und "socket" z.B. mit der festen Werkzeugplatte der Maschine geometrisch und/oder logisch gekoppelt. Die Tauchachse des Roboters verfügt z.B. über eine Flanschplatte, an welcher ein formteilspezifischer Greifer angekoppelt wird. Die Flanschplatte kann über zusätzliche Kipp-, Schwenk- und/oder Drehachsen verfügen. Das bedeutet, der logische Ankoppelpunkt, "socket", zum Ankoppeln des Greifers folgt der Fahr-, Kipp-, Schwenk- und/oder Drehbewegung der Flanschplatte. Der formteilspezifische Greifer kann beispielsweise über dessen Modell und über einen definierten Ankoppelpunkt, "plug", logisch mit dem Greiferflansch verbunden werden und kann über eventuelle Fahr-, Kipp- und/oder Drehbewegungen geometrisch mitgeführt werden. Der Greifer hat wiederum mindestens einen Ankoppelpunkt (z.B. Mittelpunkt der Saugerfläche), welcher als logischer "socket" wiederum das Formteil aufnehmen kann. Relevant ist die Lage des Greifers auch in Bezug auf den aktuellen Pfad. In bestimmten Ausrichtungen kann es bei starken Beschleunigungen zum Verrutschen des Formteils am Sauger des Greifers kommen, im Extremfall verliert der Greifer das Formteil. Je nach Greiferausrichtung kann bevorzugt die Beschleunigung entsprechend begrenzt werden. In einem Spritzgießprozess wird nach dem Ende der Formteilbildung die Form geöffnet. Die Zielposition des Greifers kann zur Entnahme des Formteils bevorzugt geometrisch bestimmt werden, wobei alle potenziellen Kollisionskanten und Störgeometrien als Hindernisse bekannt sind.

Um vorteilhaft eine schnelle und sichere Überprüfung hinsichtlich ankoppelbarer Modelle zu erhalten, wird dem wenigstens einen Kontaktpunkt bevorzugt wenigstens eine Liste zugeordnet, anhand derer ankoppelbare Modelle beschrieben und/oder aufgelistet werden. Beispielsweise wird an die bewegliche Platte der bewegliche Teil einer Spritzgießform angekoppelt. Die Spritzgießform ist ebenfalls als Modell bekannt und z.B. in der Maschine digital vorhanden. Dieser Teil des digitalen Modells der Spritzgießform (bewegliche Werkzeughälfte) verfügt nun über einen definierten Ankoppelpunkt, der in Position und Lage im Raum, im Modell genau definiert ist. Dieser Punkt kann beispielweise entsprechend "plug" genannt werden. Die bewegliche Werkzeughälfte mit ihrem Kontaktpunkt "plug" ist in der Ankoppelliste am "socket" z.B. der beweglichen Werkzeugplatte gelistet. Bevorzugt kann so durch die Verwendung eines "plug" bzw. eines "socket" beispielsweise über die Bewegung eines Peripheriegerätes und/oder eines Maschinenteils auch die Bewegung des daran gekoppelten Peripheriegerätes und/oder Maschinenteils nachvollzogen werden.

Für eine vorteilhaft präzise Berechnung des Pfades wird der Raum bevorzugt in ein Raster aus Würfeln unterteilt, welches für die Erzeugung des wenigstens einen Graphen verwendet wird. Bevorzugt wird der gesamte Raum in ein Raster aus Würfeln unterteilt, welches für die Erzeugung des wenigstens einen Graphen verwendet wird. Der Raum kann dabei wenigstens teilweise die wenigstens eine bewegbare Komponente und/oder die Maschine aufweisen. Je nachdem, ob die Maschine Maschinenteile aufweist, kann bevorzugt der Raum wenigstens teilweise auch die Maschinenteile aufweisen. Im Graph werden dann z.B. die bewegbare Komponente, die Maschine und/oder gegebenenfalls die Maschinenteile als ein Hindernis dargestellt. Die anderen Teile des Raumes ohne Hindernisse können bevorzugt als Fahrbereiche grafisch unterschiedlich, z.B. mit unterschiedlichen Farben dargestellt werden.

Weiter bevorzugt ist es möglich, dass unabhängig von der Rastergröße des Raums, welcher z.B. aus Würfeln unterteilt ist ein diagonaler Weg beschrieben werden kann. Beispielsweise kann über eine Bahnbewegung mit z.B. zwei Achsen und mit einer definierten gemeinsamen Bahngeschwindigkeit eine Diagonale abfahren werden. In dem Fall werden vorteilhaft nicht mehrere Einzelbewegungen ausgeführt, sondern bevorzugt eine Bewegung vom Startpunkt bis zum Zielpunkt, wobei sich die Achsen synchron zueinander bewegen.

Bevorzugt wird als Algorithmus wenigstens ein Greedy-Search, ein Dijkstra- und/oder ein A*-Algorithmus mit wenigstens einer offenen Liste verwendet. Vorteilhaft ergibt sich so je nach Graph der kürzeste Pfad von einem Startpunkt zu einem Zielpunkt.

Für eine vorteilhaft schnelle Berechnung des Pfades wird als Optimierung bevorzugt wenigstens eine Sprungpunkt-Suche und/oder eine Verwaltung der offenen Liste verwendet.

Für eine vorteilhaft optimierte Verwaltung der offenen Liste erfolgt bevorzugt die Verwaltung der offenen Liste mit einem Binärheap.

Für eine vorteilhafte Übersicht und eine verbesserte Sicherheit wird das Verfahren bevorzugt vorab simuliert. Es kann beispielsweise so eine Vorabsimulation der Abläufe und Pfaderstellung an einem Computermodell stattfinden, welche weiter vorteilhaft noch visualisiert werden kann.

Um vorteilhaft eine Verbesserung hinsichtlich Rechenzeit und Geschwindigkeit des Verfahrens zu gewährleisten, werden bevorzugt wenigstens zwei verschiedene Varianten des Verfahrens simuliert und in Bezug auf unterschiedliche Kriterien miteinander verglichen. Der Ablauf kann so, bezogen auf den aktuellen Werkzeug-Datensatz erstellt werden. Hierbei ist es möglich, verschiedene Varianten zu simulieren und in Bezug auf verschiedene Kriterien, z.B. Energie, Verschleiß, Fahrweg, und/oder Zykluszeit zu vergleichen.

Um den Produktionsprozess vorteilhaft auch aus der Entfernung überwachen zu können, wird bevorzugt der Graph und/oder das Modell der wenigstens einen bewegbaren Komponente und/oder der Maschine und/oder des Formteils grafisch dargestellt. Je nachdem, ob die Maschine Maschinenteile aufweist, können bevorzugt die Maschinenteile grafisch dargestellt werden.

Das beschriebene Verfahren lässt sich beispielsweise mit mehreren Werkzeugen beispielsweise an einer Spritzgießmaschine an einem Mehrkavitäten-Werkzeug und/oder einem Mehrkomponenten-Werkzeug durchführen, welches nicht direkt auf der beweglichen Platte montiert wird, sondern z.B. auf einer Dreheinheit, die wiederum als Modell hinterlegt ist, deren Lage über"plug" und "socket" genau definiert ist. Ebenfalls kann ein Mehrkomponentenwerkzeug verwendet werden, bei welchem ein Vorspritzling über ein Robotersystem umgesetzt wird. Auch möglich sind Einlegeteile, die über das Robotersystem mittels Greifer eingelegt werden. Ebenso kann ein Würfelwerkzeug ("Cube") verwendet werden, welches noch über mindestens eine Drehachse verfügt und mehrere Einlege- bzw. Entnahme-Flächen besitzt sowie dessen Sonderform ("Reverse Cube"), bei welchem der Würfel nochmals geteilt ist und gegenläufig dreht. Hier wird jede Würfelhälfte separat beschrieben.

Die Aufgabe wird zudem durch eine Maschinensteuerung für eine Maschine, die eine Spritzgießmaschine zur Verarbeitung von Kunststoffen und anderer plastifizierbarer Massen oder eine 3D-Druckmaschine ist gelöst. Für eine vorteilhafte Anpassung des Maschinenzyklus durch den Bediener sowie für Verbesserungen in Bezug auf Fahrweg, Zykluszeit, Prozesssicherheit, Energie und Verschleiß ist die Maschinensteuerung eingerichtet, ausgeführt und/oder konstruiert um das vorher beschriebene Verfahren auszuführen.

Ebenfalls wird die Aufgabe durch ein Computerprogrammprodukt gelöst. Für Vorteile hinsichtlich einer Berechnung des Pfades bezüglich Fahrweg, Zykluszeit, Prozesssicherheit, Energie und Verschleiß ist das Computerprogrammprodukt mit einem Programmpunkt auf einem Computer lesbaren Medium gespeichert zur Durchführung des oben beschriebenen Verfahrens.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine Maschine mit bewegbarer Komponente,
- Fig. 2: eine Maschine mit bewegbarer Komponente,
- Fig. 3: ein Graph nach Durchlauf eines Greedy-Search-Suchverfahren,
- Fig. 4: ein Graph nach Durchlauf eines Dijkstra-Algorithmus,
- Fig. 5: ein Flussdiagramm des A*-Algorithmus,
- Fig. 6: ein Graph nach Durchlauf eines A*-Algorithmus,
- Fig. 7a, 7b: ein Vergleich von symmetrischen Pfaden gegenüber einer Sprungpunkt-Suche,
- Fig. 8a-8c: ein Vergleich zur Reduzierung der Nachbarzahl,
- Fig. 9: ein Graph nach Durchlauf der Sprungpunkt-Suche,
- Fig. 10: eine Darstellung eines Binärheaps in einem Array,
- Fig. 11: ein Graph mit einer Bahnbewegung.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

In einem Ausführungsbeispiel wird bei einem Verfahren zur Bestimmung wenigstens eines Teils eines Pfades 12 zur Verbindung wenigstens eines Startpunktes 14 mit wenigstens einem Zielpunkt 16 in einem Raum R für wenigstens eine Autonavigation wenigstens einer bewegbaren Komponente wie z.B. eines Peripheriegerätes durch den Raum an einer Maschine 100, die eine Spritzgießmaschine zur Verarbeitung von Kunststoffen und anderer plastifizierbarer Massen oder eine 3D-Druckmaschine ist, die zur Entnahme, Umsetzung und/oder Ablage eines Formteils eingerichtet ist, in einem ersten Schritt wenigstens ein Modell der wenigstens einen bewegbaren Komponente und der Maschine 100 und des Formteils 122 bereitgestellt. Das Modell kann beispielsweise als digitales Modell bereitgestellt werden.

Die Maschine 100 kann wenigstens ein Maschinenteil aufweisen, wie z.B. ein Formwerkzeug, ein Formnest, ein Formteil, einen Anguss, eine bewegliche Platte 110, eine stationäre Platte 112, und/oder eine Einspritzeinheit. Weiter kann die Maschine noch weitere Maschinenteile und/oder Komponenten einer Spritzgießmaschine oder einer 3D-Druckmaschine aufweisen. Die Maschinenteile können sich auch bewegen, wie z.B. die bewegliche Platte 110.

Je nachdem, ob die Maschine Maschinenteile aufweist, kann bevorzugt ein Modell des Maschinenteils bereitgestellt werden.

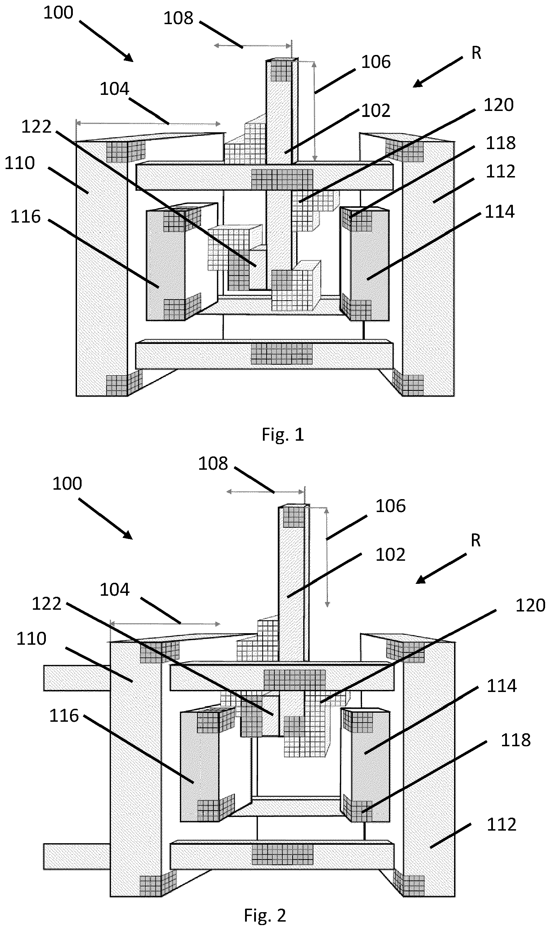

Als "bewegbaren Komponente" wird ein relativ zur Maschine bewegbares Element wie z.B. ein Peripheriegerät verstanden. Dabei kann es sich um Greifer, Roboter, Auswerfer oder auch andere bewegbare Komponenten eines Peripheriegeräts als auch der Maschine handeln, die sich im Raum R bewegen, so dass eine Kollision mit der Maschine zu vermeiden ist, insbesondere wenn sich auch die Maschine bewegt. Die Fig. 1, 2 zeigen als Beispiel für eine bewegbare Komponente eine Tauchachse 102.

In einem weiteren Schritt werden Geometrieinformationen des Raums R und der wenigstens einen bewegbaren Komponente und der Maschine 100 und des Formteils 122 erfasst. Die Geometrieinformationen können dabei wenigstens teilweise aus dem Modell bzw. aus den Modellen abgeleitet werden. Beispielsweise können die Geometrieinformationen auch über Sensoren erfasst werden.

Je nachdem, ob die Maschine 100 Maschinenteile aufweist, können bevorzugt Geometrieinformationen des Maschinenteils erfasst werden.

Weiterhin wird in einem weiteren Schritt eine aktuelle Lage der wenigstens einen bewegbaren Komponente und der Maschine 100 und des Formteils 122 im Raum R bestimmt. Die aktuelle Lage kann beispielsweise über Sensoren oder über Positionsistwerte der wenigstens einen bewegbaren Komponente und/oder der Maschine erfasst werden.

Je nachdem, ob die Maschine 100 Maschinenteile aufweist kann bevorzugt eine aktuelle Lage des Maschinenteils bzw. der Maschinenteile bestimmt werden.

In einem weiteren Schritt werden die Geometrieinformationen und die aktuelle Lage der wenigstens einen bewegbaren Komponente sowie der 100 Maschine und des Formteils 122 im Raum R zueinander zur Erzeugung wenigstens eines Graphen 10 des Raums R in Beziehung gesetzt.

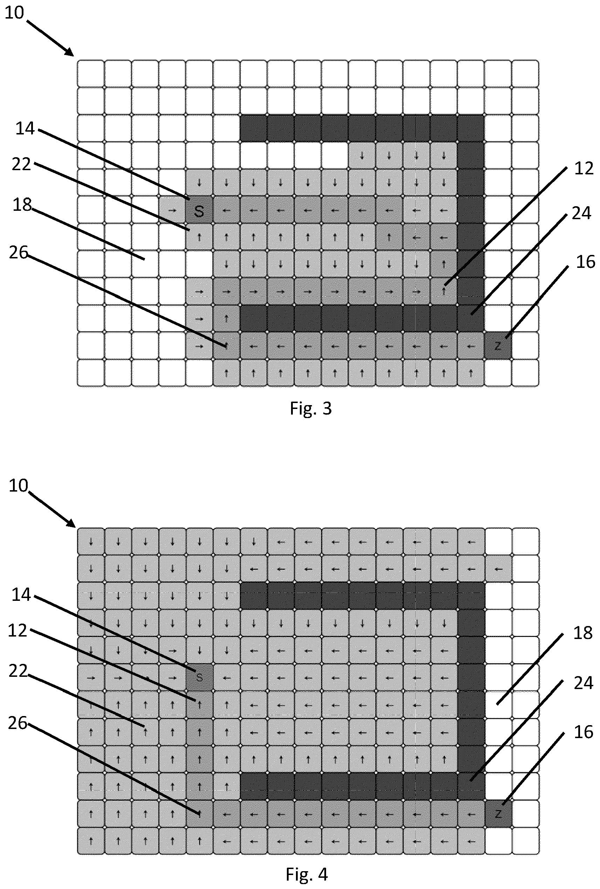

Je nachdem, ob die Maschine Maschinenteile aufweist, können bevorzugt die Geometrieinformationen und die aktuelle Lage des Maschinenteils ebenso zur Erzeugung des Graphen 10 in Beziehung gesetzt werden. Beispielsweise ergibt sich somit ein Graph 10 gemäß Fig. 3, in dem beispielsweise die Maschine 100, bewegbare Komponenten und vorhandene Maschinenteile als Hindernisse 24 dargestellt sind. Der Einfachheit halber ist der Graph 10 in Fig. 3 lediglich als zweidimensionaler Graph dargestellt. Prinzipiell kann der Graph aber für andere und/oder mehrere Dimensionen dargestellt werden, z.B. als ein eindimensionaler oder dreidimensionaler Graph.

Die Berechnung des Pfades 12 unter Anwendung wenigstens eines Algorithmus auf den Graphen 10 erfolgt in einem weiteren Schritt, wobei für das Berechnen des Pfades 12 zusätzlich wenigstens eine Optimierung durchgeführt wird.

In einem weiteren Schritt wird wenigstens eine Kollisionsprüfung entlang des Pfades 12 durchgeführt. Die Kollisionsprüfung erfolgt in Echtzeit.

Dann erfolgt in einem weiteren Schritt die Autonavigation der wenigstens einen bewegbaren Komponente entlang des Pfades 12.

Bevorzugt kann eine Berechnung eines Pfades und eine Autonavigation entlang des Pfades auch für Maschinenteile der Maschine 100 erfolgen. So kann beispielsweise zusätzlich zur Autonavigation der bewegbaren Komponente z.B. des Peripheriegeräts eine Autonavigation eines oder auch mehrerer Maschinenteile erfolgen.

Im Ausführungsbeispiel wird der Algorithmus unter dynamischer Änderung des Graphen 10 infolge von Bewegungen der wenigstens einen bewegbaren Komponente und/oder der Maschine 100 und/oder des Formteils 122 angewandt. Je nachdem, ob die Maschine Maschinenteile aufweist, kann bevorzugt der Algorithmus unter dynamischer Änderung des Graphen 10 infolge von Bewegungen des wenigstens einen Maschinenteils angewandt werden. Beispielsweise kann es während der Autonavigation zu einer Bewegung anderer Maschinenteile, bewegbaren Komponenten und/oder der Maschine auch relativ zueinander kommen. Aufgrund dieser Bewegung kann es vorkommen, dass der Graph 10, d.h. die "Karte", sich ändert und somit ein Hindernis 118 auf dem bereits berechneten Pfad 12 auftaucht. Der Algorithmus erkennt diese Änderung des Graphen 10 bevorzugt automatisch und registriert, ob ein Hindernis auf dem Pfad 12 liegt. Ist dies der Fall, wird der Algorithmus erneut angewandt, wobei als Startpunkt 14 nun die aktuelle Istposition verwendet wird. So kann bei einer für die Autonavigation relevanten Parameteränderung im laufenden Zyklus der Pfad 12 angepasst werden. Weiter erfolgt die Berechnung, die Kollisionsprüfung und/oder das Autonavigieren vorausschauend. Beispielsweise taucht entlang des Pfades nur während einer bestimmten Zeitspanne ein Hindernis 118 auf, welches jedoch bereits dann wieder vom Pfad verschwunden ist, bevor die bewegbare Komponente, die Maschine 100, das Formteil und/oder gegebenenfalls das Maschinenteil damit kollidieren würde. Vorteilhaft muss so nicht die Richtung gewechselt werden, wodurch beispielsweise Erschütterungen aufgrund von Richtungsänderungen vermieden werden.

Im Ausführungsbeispiel der Fig. 1 ist eine Maschine 100 mit einer bewegbaren Komponente, z.B. einer Tauchachse 102 als bewegbare Komponente dargestellt, welche gerade ein Formteil 122 entnimmt. Die Tauchachse 102 soll das Formteil 122 kollisionsfrei, autonavigiert entnehmen und kann in verschiedene Richtungen 106, 108, im Ausführungsbeispiel gemäß Fig. 1 nach links, rechts, oben und unten bewegt werden. Prinzipiell ist es denkbar, dass die Tauchachse 102 bevorzugt zusätzlich auch eine Kipp-, Schwenk- und Drehbewegung ausführen kann und somit beliebige Positionen im Raum einnehmen kann. Dadurch ergeben sich beliebige Vektoren, welche die Tauchachse 102 aufweisen kann.

Die Maschine 100 weist weiter eine Schließeinheit mit einer beweglichen Platte 110 und einer stationären Platte 112 auf, die zwischen sich einen Formspannraum zur Aufnahme von Formwerkzeugen mit zwei Werkzeughälften 114, 116 aufspannen. Die bewegliche Platte 110 kann in einer Richtung 104, im Ausführungsbeispiel gemäß Fig. 1 nach links und rechts, bewegt werden. Prinzipiell denkbar ist auch, dass die stationäre Platte 112 in einer Richtung, z.B. in der Richtung 104 bewegt werden kann. Durch die Bewegung der beweglichen Platte 110 bewegt sich auch die Werkzeughälfte 116. Der Raum R, in dem ich die Maschine 100 befindet, weist somit Hindernisse 118 und Fahrbereiche 120 auf, in denen ein kollisionsfreies Autonavigieren nicht bzw. möglich ist.

In Fig. 2 ist eine Bewegung der Tauchachse 102 als bewegbare Komponente und der beweglichen Werkzeugplatte 110 dargestellt. Die Tauchachse 102 wurde dort mit dem Formteil 122 nach oben entlang der Richtung 106 bewegt. Die bewegliche Platte 110 wurde entlang der Richtung 104 nach rechts bewegt. Durch die Bewegungen entstehen entsprechend neue Hindernisse 118 und Fahrbereiche 120 für die Autonavigation.

In einem weiteren bevorzugten Ausführungsbeispiel wird jeweils wenigstens ein Kontaktpunkt von der wenigstens eine bewegbare Komponente und der Maschine 100 in Bezug auf eine Lage des wenigstens eines Kontaktpunktes im Raum R bereitgestellt, wobei die Kontaktpunkte miteinander für das Bereitstellen des Modells der wenigstens einer bewegbaren Komponente und der Maschine logisch gekoppelt werden. Je nachdem, ob die Maschine Maschinenteile aufweist, kann bevorzugt jeweils ein Kontaktpunkt des Maschinenteils bzw. der Maschinenteile bereitgestellt werden, welche logisch mit anderen Kontaktpunkten gekoppelt werden können. Beispielsweise kann an die bewegliche Platte 110 der bewegliche Teil einer Spritzgießform angekoppelt werden. Die Spritzgießform ist ebenfalls als Modell bekannt und vorhanden. Z.B. verfügt der bewegliche Teil des Modells der Spritzgießform (bewegliche Werkzeughälfte 116) über einen definierten Kontaktpunkt, der in Position und Lage im Raum R, im Modell genau definiert ist. Dieser Punkt kann als "plug" bezeichnet werden.

In einem weiteren bevorzugten Ausführungsbeispiel wird dem wenigstens einen Kontaktpunkt wenigstens eine Liste zugeordnet, anhand derer ankoppelbare Modelle beschrieben und/oder aufgelistet werden. Um beim obigen Beispiel mit der beweglichen Werkzeughälfte 116 zu bleiben, ist diese mit ihrem Kontaktpunkt "plug" in der Liste am "socket" der beweglichen Platte 110 gelistet.

In einem weiteren bevorzugten Ausführungsbeispiel gemäß Fig. 3 wird der Raum R in ein Raster aus Würfeln 18 unterteilt, welches für die Erzeugung des wenigstens einen Graphen 10 verwendet wird. Der Raum R kann wenigstens teilweise die wenigstens eine bewegbare Komponente und/oder die Maschine 100 aufweisen. Je nachdem, ob die Maschine Maschinenteile aufweist, kann der Raum bevorzugt wenigstens teilweise ein Maschinenteil aufweisen, welches z.B. im Graph 10 gemäß Fig. 3 als ein Hindernis 24 dargestellt ist. In Fig. 3 ist der Einfachheit halber lediglich eine Ebene des Raums mit Hindernissen 24 als Graph 10 dargestellt. Der Graph kann jedoch grundsätzlich dreidimensional sein.

In einem weiteren bevorzugten Ausführungsbeispiel wird als Algorithmus wenigstens ein Greedy-Search-, ein Dijkstra- und/oder ein A*-Algorithmus mit wenigstens einer offenen Liste verwendet.

Im Folgenden wird vorgestellt, wie Pfade 12 zwischen zwei beliebigen Punkten 14, 16 in einem Graphen 10 berechnet werden. Kürzeste-Wege-Probleme sind häufig im Bereich der künstlichen Intelligenz zu finden und sind mit dem Ziel, einen möglichsten guten Pfad 12 durch einen Graphen 10 zu finden, meist mit einer recht hohen Komplexität verbunden. Die Wegfindung befasst sich mit dem Problem, einen Pfad 12 in einem Graphen 10 von einem Startpunkt 14 zu einem Zielpunkt 16 zu finden. Der Graph 10 muss für die vorgestellten Ansätze die Eigenschaft erfüllen, dass alle Kanten des Graphen 10 positiv gewichtet sind. Dafür wird der Maschinenraum in ein Raster aus Würfeln 18 unterteilt, welche auch Knoten 18 genannt werden. Basierend auf dem rasterförmigen Modell des Raumes R, welches als Graph 10 verwendet wird, ist ein möglichst kurzer Pfad 12 vom Startpunkt 14 zum Zielpunkt 16 gesucht. Dazu kommt, dass der Suchgraph 10 nur implizit vorliegt. Es muss also für jeden Knoten 18 beim Betreten überprüft werden, ob dieser Knoten 18 eine gültige Position des Robot-Systems ist oder ein Hindernis 24 darstellt.

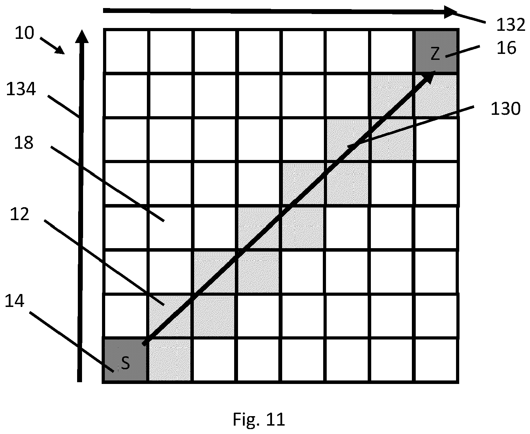

Der Greedy-Search-Algorithmus (gierige Suche) ist ein informiertes Suchverfahren und benötigt eine Schätzfunktion (Heuristik). Diese schätzt die Entfernung von einem beliebigen Knoten 18 zum Zielpunkt 16. Beispielsweise ist es denkbar, dass z.B. ein Roboter eine Achse nach der anderen Achse bewegen soll. Deshalb kann als Heuristikfunktion z.B. die Manhattan-Distanz verwendet werden. Der Roboter kann sich jedoch nicht nur linear in X-, Y- oder Z-Richtung bewegen oder nur eine Achse nach der anderen bewegen. Unabhängig von der Rastergröße, kann z.B. mit Würfeln auch ein diagonaler Weg beschrieben werden. Prinzipiell ist es in einem weiteren bevorzugten Ausführungsbeispiel auch möglich, dass der Roboter über eine Bahnbewegung 130 mit z.B. zwei Achsen 132, 134 (z.B. Y und Z), mit einer definierten gemeinsamen Bahngeschwindigkeit eine Diagonale abfährt (Fig. 11). In dem Fall in Fig. 11 führt der Roboter z.B. nicht 14 Einzelbewegungen aus, sondern eine Bewegung vom Startpunkt 14 bis zum Zielpunkt 16, wobei sich beide Achsen synchron zueinander bewegen.

Die Suche beginnt beim Startpunkt 14, dieser wird expandiert. Beim Expandieren werden alle vom Startpunkt 14 erreichbaren Knoten 18 über die Heuristik auf ihre geschätzte Entfernung zum Zielpunkt 16 hin untersucht. Außerdem wird in jedem besuchten Knoten 22 eine Referenz auf den Knoten 18 gespeichert, der gerade expandiert wird (siehe Pfeile 26 in Fig. 3). Somit kennt jeder besuchte Knoten 22 seinen Vorgänger. Der Knoten mit der besten Heuristik wird als nächstes expandiert. Iterativ wird so lange der günstigste Knoten expandiert, bis der Zielpunkt 16 gefunden ist. Als Folgeknoten wird also immer derjenige Knoten 18 gewählt, welcher zum Zeitpunkt der Wahl das beste Ergebnis verspricht. Einmal getroffene Entscheidungen werden nicht aus globaler Sicht analysiert oder revidiert.

Wenn der Zielpunkt 16 gefunden wurde, kann der Pfad 12 vom Zielpunkt 16 zum Startpunkt 14 einfach über die gespeicherten Vorgänger der Knoten 18 zurückverfolgt werden. Dieser Pfad 12 ist in umgekehrter Reihenfolge der gesuchte Pfad 12 vom Startpunkt 14 zum Zielpunkt 16. Ein Vorteil des Greedy-Search-Algorithmus ist, dass er einfach zu entwerfen und effizient zu implementieren ist. Er löst Probleme schnell, jedoch nicht immer optimal. In Fig. 3 ist ein Beispiel dargestellt, dass der gefundene Pfad 12 nicht immer der kürzeste ist. Aus diesem Grund ist der Greedy-Search-Algorithmus nicht immer geeignet, den kürzesten Pfad 12 zu finden.

Der Dijkstra-Algorithmus gemäß Fig. 4 löst im Gegensatz zum Greedy-Search-Algorithmus das Problem des kürzesten Pfades. Statt eine schätzende Heuristik zu verwenden, geht Dijkstra den umgekehrten Weg. Der Dijkstra-Algorithmus speichert die Kosten des Pfades von den besuchten Knoten 18 zum Startpunkt 14. Außerdem merkt sich ebenfalls jeder besuchte Knoten 18 seinen Vorgängerknoten. Beginnend beim Startpunkt 14 wird iterativ der Knoten 18, der die bisher geringsten zurückgelegten Pfadkosten hat, expandiert. Beim Expandieren werden für alle direkten Nachbarn des aktuellen Knoten 18 die Kosten zum Startpunkt 14 ermittelt. Das ist in diesem Fall denkbar einfach. Da alle Knoten 18 in dem Raster gleich groß sind, kann für das Betreten eines Knotens immer "1" als Kosten veranschlagt werden. Die Kosten ergeben sich also aus der Anzahl der besuchten Knoten 22 zwischen dem Startpunkt 14 und der untersuchten Position. Aus diesem Grund wird das gesamte Gebiet um den Startpunkt 14 gleichmäßig erforscht. Dadurch, dass jeder Knoten 18 seinen Vorgänger kennt, ist von jedem Knoten 18 der kürzeste Weg zum Startpunkt 14 bekannt. Wenn der Zielpunkt 16 durch das gleichmäßige Expandieren gefunden wird, terminiert der Algorithmus, da der gefundene Pfad 12 bereits der günstigste ist. Der Pfad 12 muss auch hier in umgekehrter Reihenfolge abgearbeitet werden. Nachvollziehen kann man das, indem man sich in Fig. 4 einen beliebigen besuchten Knoten 22 aussucht und die Pfeile 26 bis zum Startpunkt 14 verfolgt.

Fig. 4 zeigt deutlich, dass der Dijkstra-Algorithmus im Vergleich zum Greedy-Search-Algorithmus (Fig. 3) zwar den kürzesten Pfad 12 findet, jedoch deutlich mehr Knoten 18 dafür untersuchen muss. Das liegt daran, dass dieser die Information, an welcher Stelle der Zielpunkt 16 sich im Graphen 10 befindet, nicht bei der Auswahl der zu expandierenden Knoten 18 nutzen kann. Stärken kann der Algorithmus vor allem in Szenarien zeigen, in denen die Position des Zielpunkts 16 unbekannt ist. Bei bekannter Position des Zielpunkts 16 werden aber in den meisten Fällen unnötig viele Knoten 18 expandiert. Das geht sehr zu Lasten der Laufzeit und des Speicherverbrauches.

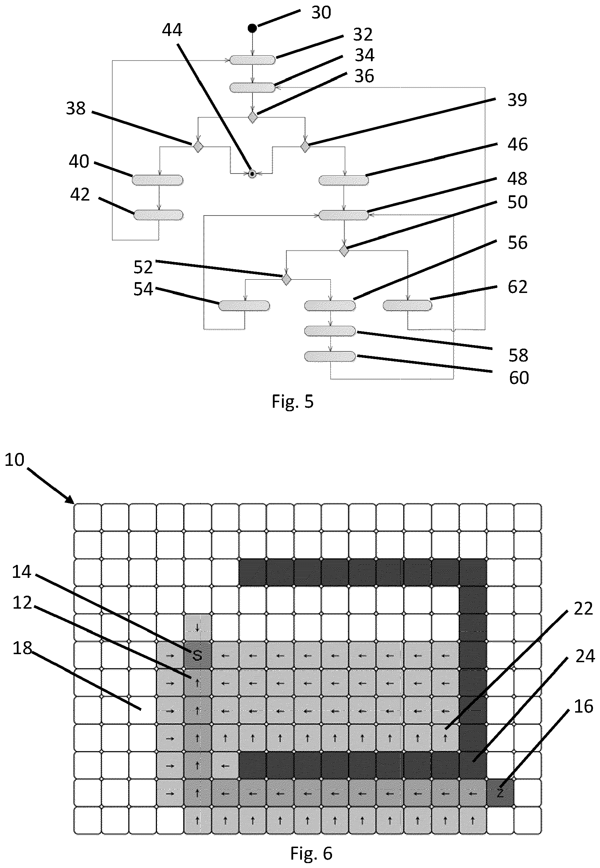

Auf dem Gebiet der künstlichen Intelligenz ist der A*-Algorithmus ein bewährter Ansatz, um in einem gerichteten Graphen 10 den besten Pfad 12 zwischen dem Startpunkt 14 und dem Zielpunkt 16 zu berechnen. Der A*-Algorithmus kombiniert die Vorteile des Dijkstra-Algorithmus und des Greedy-Search-Algorithmus und eliminiert weitestgehend die Nachteile. Wenn ein Pfad 12 gefunden wird, ist dieser immer optimal. Die Anzahl der besuchten Knoten 22 ist in den meisten Fällen deutlich geringer als beim Durchlauf von Dijkstras-Algorithmus (Fig. 6). Im schlechtesten Fall jedoch gleich groß. Für jeden besuchten Knoten Ki aus dem Pfad 12 werden die geschätzten Pfadkosten F für den gesamten Pfad 12 vom Startpunkt 14 zum Zielpunkt 16 berechnet.

Um die Pfadkosten F zu ermitteln, gilt die Formel: F = G + H. G sind die Kosten für den bereits zurückgelegten Pfad 12 vom Startpunkt 14 zum Knoten Ki. Um G zu bestimmen, werden auf das G des Vorgängers die Kosten für das Besuchen von einem Knoten 18 addiert. H steht für Heuristik, also die geschätzten Kosten die von Knoten Ki zum Zielpunkt 16 anfallen werden. Dafür wird wie bei dem Greedy-Search-Algorithmus eine Heuristikfunktion verwendet. Diese muss immer an die spezifische Problemstellung angepasst werden. Die Garantie auf den günstigsten Pfad 12 ist nur gegeben, wenn die Heuristikfunktion unterschätzend ist. Sie darf also niemals höhere Kosten schätzen, als tatsächlich anfallen. Je genauer die Schätzfunktion ist, desto schneller läuft der A*-Algorithmus ab. Auch hier ist es beispielsweise denkbar, dass z.B. ein Roboter eine Achse nach der anderen Achse bewegen soll. Beispielsweise kann dann wie beim Greedy-Search-Algorithmus die Manhattan-Distanz als Heuristikfunktion verwendet werden. Prinzipiell kann der Roboter sich jedoch nicht nur linear in X-, Y- oder Z-Richtung oder nur eine Achse nach der anderen Achse bewegen. Unabhängig von der Rastergröße, kann z.B. mit Würfeln auch ein diagonaler Weg beschrieben werden. Prinzipiell ist es in einem weiteren bevorzugten Ausführungsbeispiel auch möglich, dass der Roboter über eine Bahnbewegung 130 mit z.B. zwei Achsen 132, 134 (z.B. Y und Z), mit einer definierten gemeinsamen Bahngeschwindigkeit eine Diagonale abfährt (Fig. 11). In dem Fall in Fig. 11 führt der Roboter nicht 14 Einzelbewegungen aus, sondern eine Bewegung vom Startpunkt 14 bis zum Zielpunkt 16, wobei sich beide Achsen synchron zueinander bewegen. Weiter werden beim A*-Algorithmus eine offene und eine geschlossene Liste verwendet. In die offene Liste werden die besuchten, in die geschlossene alle vollständig untersuchten Knoten 18 gelegt.

In Fig. 5 ist anhand eines Flussdiagramms der Ablauf des A*-Algorithmus erklärt. Zum Start 30 wird der Startpunkt 14 bzw. der Startknoten in Schritt 32 in die offene Liste gelegt, dann wird in Schritt 34 in einer Schleife 36 immer der Knoten 18 mit dem günstigsten F-Wert aus der offenen Liste geholt und bearbeitet. Wenn die offene Liste leer ist, bedeutet das, dass der Algorithmus keine Lösung gefunden hat. Da z.B. der Roboter seine Geometrie mithilfe von Rotationsachsen ändern kann, muss die Suche hier noch nicht aufgegeben werden.

In einer weiteren Schleife 38 wird überprüft, ob es z.B. Rotationsachsen gibt, die noch nicht betätigt wurden. Können diese in einem Schritt 40 bewegt werden, beginnt die Suche in einem weiteren Schritt 42 von neuem. Ansonsten hat der Algorithmus ein Ende 44. Erfolgreich terminiert die Suche, wenn der Zielpunkt 16 in einer Schleife 39 gefunden ist. Wenn ein Knoten 18 in Schritt 46 bearbeitet werden soll, wird in Schritt 48 in den Schleifen 50, 52 für jeden seiner direkten Nachbarn geprüft, ob diese Hindernisse 24 darstellen oder bereits in der geschlossenen Liste sind. Falls ja, wird der Nachbar in einem Schritt 54 ignoriert. Andernfalls werden in einem Schritt 56 für den Nachbarn die G- und H-Werte bestimmt und in einem Schritt 58 der aktuelle Knoten als Vorgänger gespeichert. Abschließend wird in einem Schritt 60 der Nachbar in die offene Liste eingefügt. Sind alle Nachbarn eines Knotens untersucht, kommt dieser in einem Schritt 62 in die geschlossene Liste.

Sobald ein Knoten 18 in die geschlossene Liste eingefügt wurde, ist der günstigste Weg von diesem Knoten 18 bekannt. Im schlechtesten Fall, muss der A*-Algorithmus alle Knoten 18 besuchen. Hindernisse 24 auf der Ideallinie verschlechtern die Laufzeit immens, da die Kosten entlang des Hindernisses 24 wachsen und daher zuerst viele Knoten 18 in der falschen Richtung untersucht werden müssen.

In einem weiteren bevorzugten Ausführungsbeispiel wird als Optimierung wenigstens eine Sprungpunkt-Suche und/oder eine Verwaltung der offenen Liste verwendet.

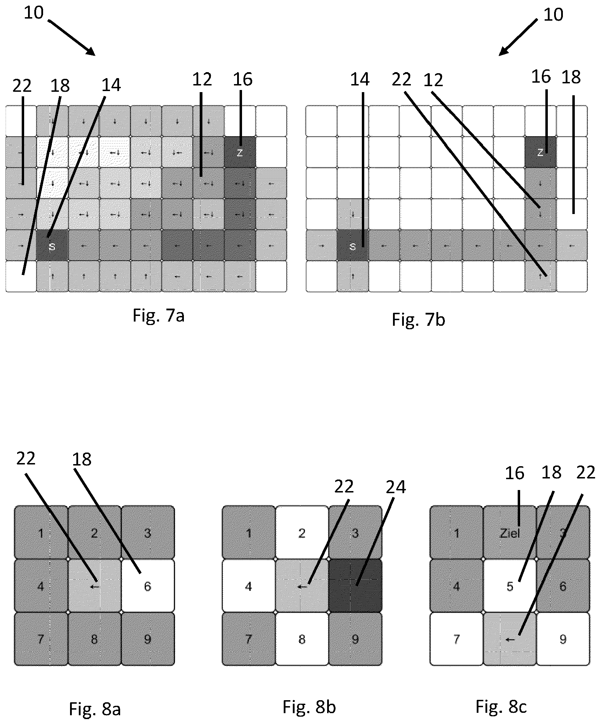

Bei genauerer Betrachtung des Suchgraphen nach dem Durchlauf des A*-Algorithmus in Fig. 7a fällt auf, dass es eine Vielzahl von Pfaden 12 mit den gleichen Kosten gibt. Dieses Phänomen tritt in rasterförmig angeordneten Graphen 10 auf, die nur horizontale oder vertikale Bewegungen erlauben. Diese Pfade 12 werden symmetrisch genannt, da sie sich nur in der Reihenfolge der Bewegungen unterscheiden. Für den Graphen 10 in Fig. 7a und Fig. 7b bedeutet das, dass z.B. der Roboter insgesamt sechs Knoten 18 nach rechts und drei Knoten 18 nach oben fährt. Die Reihenfolge der Aktionen spielt keine Rolle. Durch Berücksichtigung dieser Eigenschaft, kann die Anzahl der besuchten Knoten 18 erheblich reduziert werden.

Um ein Ergebnis wie in Fig. 7b erreichen zu können, muss die Symmetrie der Pfade 12 berücksichtigt werden. Der Weg zum Erfolg führt über das Reduzieren der Nachbarn (Neighbour Pruning). Im Gegensatz zum A*-Algorithmus werden beim Expandieren eines Knotens 18 nicht immer alle Nachbarknoten untersucht, sondern in den meisten Fällen nur einer (anstatt vier im zweidimensionalen und sechs im dreidimensionalen Raum). Die wichtigsten drei Regeln dafür lassen sich aus Fig. 8a - 8c ableiten.

### 1. Regel:

Alle Nachbarn, die sich nicht genau in Bewegungsrichtung befinden, werden nicht beachtet. Im Beispiel in Fig. 8a ist der Knoten Nummer 6 der einzige Knoten, der in die offene Liste gelegt wird. Die Knoten mit der Nummer 2, 4 und 8 werden nicht untersucht.

### 2. Regel:

Wenn der aktuelle Knoten 18 an ein Hindernis 24 grenzt, werden wie beim A*-Algorithmus alle befahrbaren Nachbarn untersucht (Fig. 8b). Das ist nötig, um Hindernisse 24 ideal zu umfahren und den kürzesten Pfad 12 zu finden.

### 3. Regel:

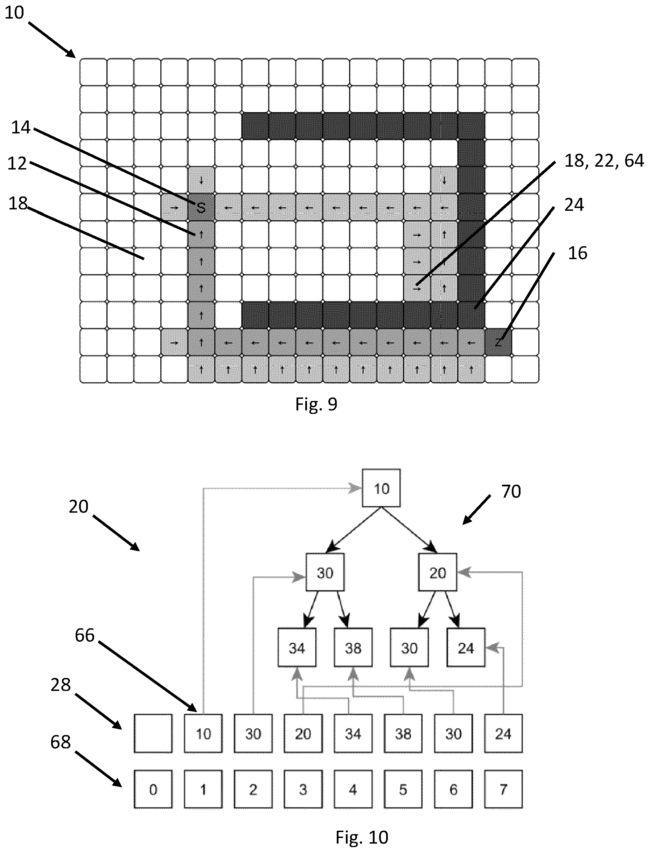

Wenn der in Regel 1 ausgewählte Nachbar einen schlechteren F-Wert als der aktuelle Knoten 18 bekommt, werden alle befahrbaren Nachbarn untersucht (Fig. 8c). So wird verhindert, dass der Pfad 12 in einer Dimension am Ziel vorbei geht (Fig. 9).

Während Regel 1 das Weglassen der Nachbarn beschreibt, sorgen die Regeln 2 und 3 dafür, dass die Suche weiterhin ein optimales Ergebnis abliefert. Diese finden die so genannten Sprungpunkte 64 (Jump-Points), die der Sprungpunkt-Suche ihren Namen gibt. Diese Punkte heißen Sprungpunkte 64, weil zwischen ihnen sehr schnell und nur gerade aus navigiert wird. Sprungpunkte 64 erkennt man daran, dass sie mehr als einen Nachbarn untersuchen. In Fig. 9 ist zum Beispiel der Knoten 18, in dem der Pfad 12 seine Richtung nach rechts ändert, ein Sprungpunkt 64.

Als Vorteile der Sprungpunkt-Suche ergeben sich folgende Punkte:
1. Sie ist optimal (findet den günstigsten Pfad 12).
2. Vorberechnungen werden nicht benötigt.
3. Es wird kein Mehrverbrauch von Speicher verursacht.
4. Beschleunigt den einfachen A*-Algorithmus erheblich. Dabei gilt: je länger der Pfad 12, desto größer ist die Verbesserung.

Im direkten Vergleich mit Hindernissen 24 zwischen dem einfachen A*-Algorithmus (Fig. 6) und dem optimierten A*-Algorithmus mit einer Sprungpunkt-Suche (Fig. 9) ist nochmals deutlich zu sehen, wie viele Knotenuntersuchungen mit der Optimierung eingespart werden können.

Ein großer Teil der Rechenzeit beim A*-Algorithmus entfällt auf das Durchsuchen der offenen Liste nach dem Element mit dem geringsten F-Wert. Je größer Graph 10, desto höher ist der Laufzeitanteil, der zur Verwaltung der offenen Liste benötigt wird. Da der Graph 10 z. B. des Maschinenraumes sehr groß ist, lohnt es sich, die Verwaltung der offenen Liste zu optimieren. Im einfachsten Fall werden alle Elemente der offenen Liste in einer Array-Liste gehalten. Das ermöglicht ein schnelles Einfügen (Komplexität: O(1)) in die Liste, aber das verlangsamt das vorstellbare Entfernen eines Elements, da jedes Element durchsucht werden muss, um das kleinste F zu finden (Komplexität: O(n)). Bei einer langen offenen Liste kann das schnell problematisch werden. Eine Möglichkeit, das Entfernen von Elementen einfach zu beschleunigen, ist die offene Liste sortiert zu halten. Die beim Einfügen entstehenden Kosten sind gerade bei größeren Listen nur ein Bruchteil von dem, was ansonsten beim Entfernen benötigt würde. Wird ein Sortieralgorithmus zum Einfügen mit einer Komplexität < O(n) gewählt, hat sich der Aufwand gelohnt. Die Komplexität der Entfernen-Operation beträgt in einer sortierten Liste O(1).

In einem weiteren bevorzugten Ausführungsbeispiel erfolgt die Verwaltung der offenen Liste mit einem Binärheap 20. Sehr effektiv können Daten strukturiert in einem Binärheap 20 (Binary Heap) gehalten werden. Dieser kann z.B. in einem einfachen Array gespeichert werden. Einfüge-, Lösch- und Suchoperationen können mit einer Worst-Case-Laufzeit von O(log n) erledigt werden, die Suche nach dem kleinsten Element 66 (diese wird beim A*-Algorithmus verwendet) sogar mit O(1). Allerdings muss nach dem Zugriff auf das kleinste Element dieses auch gelöscht werden. Anders als in einer sortierten Liste, ist ein Binärheap 20 nicht streng absteigend oder aufsteigend sortiert. Es handelt sich um einen Binärbaum 70, der zwei zusätzliche Bedingungen erfüllt:
1. Der Binärbaum 70 ist linksbündig balanciert.
2. Für jeden Knoten 18 gilt: Der eigene Schlüssel ist kleiner als der Schlüssel der Kindknoten.

Damit steht an erster Stelle des Binärbaumes 70 immer das kleinste Element 66. Fig. 10 zeigt exemplarisch einen Binärheap 20. Es fällt auf, dass im Array 28 kein Element 66 an der nullten Stelle steht. Berechnungen der Indizes von Kind- oder Vaterknoten werden dadurch vereinfacht.

In einem weiteren bevorzugten Ausführungsbeispiel wird das Verfahren bei einer Änderung im Produktionsablauf in Echtzeit simuliert und/oder der Algorithmus reagiert auf veränderte Positionen und/oder Geschwindigkeiten der wenigstens einen bewegbaren Komponente und/oder der Maschine 100, indem wenigstens eine weitere Kollisionsprüfung durchgeführt und/oder wenigstens ein neuer Pfad 12 berechnet wird. Je nachdem, ob die Maschine Maschinenteile aufweist, kann bevorzugt der Algorithmus auf veränderte Positionen und/oder Geschwindigkeiten wenigstens eines Maschinenteils reagieren.

In einem weiteren bevorzugten Ausführungsbeispiel wird das Verfahren vorab simuliert. Beispielsweise ist eine Vorabsimulation der Abläufe und Pfaderstellung an einem Computermodell möglich.

In einem weiteren Ausführungsbeispiel werden wenigstens zwei verschiedene Varianten des Verfahrens simuliert und in Bezug auf unterschiedliche Kriterien miteinander verglichen. Beispielsweise können so verschiedene Kriterien des Verfahrens in Bezug auf z.B. Energie, Verschleiß, Fahrweg und/oder Zykluszeit verglichen und das gewünschte günstige Verfahren ausgewählt werden. Beispielsweise ist bei bestimmten Prozessen die Zykluszeit zweitrangig, während es jedoch stark auf den Verschleiß ankommt bzw. darauf geachtet werden muss, da z.B. das Werkzeug stark beansprucht wird.

Zur besseren Übersichtlichkeit wird in einem weiteren Ausführungsbeispiel der Graph und/oder das Modell der wenigstens einen bewegbaren Komponente und/oder der Maschine 100 und/oder des Formteils 122 grafisch dargestellt. Je nachdem, ob die Maschine Maschinenteile aufweist, kann bevorzugt auch das Maschinenteil grafisch dargestellt werden. Beispielsweise kann die Darstellung auf einer Maschinensteuerung, einem Bildschirm oder einem Computer erfolgen.

In einem Ausführungsbeispiel ist eine Maschinensteuerung für eine Maschine 100, die eine Spritzgießmaschine zur Verarbeitung von Kunststoffen und anderer plastifizierbarer Massen oder eine 3D-Druckmaschine ist, welche eingerichtet, ausgeführt und/oder konstruiert ist, um wenigstens eines der vorher beschriebenen Verfahren unter Erreichung der genannten Vorteile auszuführen.

Ein weiteres Ausführungsbeispiel bildet ein Computerprogrammprodukt mit einem Programmcode, der auf einem Computer lesbaren Medium gespeichert ist, zur Durchführung wenigstens eines der zuvor beschriebenen Verfahren unter Erreichung der genannten Vorteile.

### Bezugszeichenliste

| | | | |
|---|---|---|---|
| 10 | Graph | 100 | Maschine |
| 12 | Pfad | 102 | Tauchachse |
| 14 | Startpunkt | 104 | Richtung |
| 16 | Zielpunkt | 106 | Richtung |
| 18 | Würfel, Knoten | 108 | Richtung |
| 20 | Binärheap | 110 | bewegliche Platte |
| 22 | besuchter Knoten | 112 | stationäre Platte |
| 24 | Hindernis | 114 | Werkzeughälfte |
| 26 | Pfeil | 116 | Werkzeughälfte |
| 28 | Array | 118 | Hindernis |
| 30 | Start | 120 | Fahrbereich |
| 32 | Schritt | 122 | Formteil |
| 34 | Schritt | 130 | Bahnbewegung |
| 36 | Schleife | 132 | Achse |
| 38 | Schleife | 134 | Achse |
| 39 | Schleife | R | Raum |
| 40 | Schritt | | |
| 42 | Schritt | | |
| 44 | Ende | | |
| 46 | Schritt | | |
| 48 | Schritt | | |
| 50 | Schleife | | |
| 52 | Schleife | | |
| 54 | Schritt | | |
| 56 | Schritt | | |
| 58 | Schritt | | |
| 60 | Schritt | | |
| 62 | Schritt | | |
| 64 | Sprungpunkt | | |
| 66 | Element | | |
| 68 | Index | | |
| 70 | Binärbaum | | |

## Patentansprüche

1. Verfahren zur Bestimmung wenigstens eines Teils eines Pfades (12) zur Verbindung wenigstens eines Startpunkts (14) mit wenigstens einem Zielpunkt (16) in einem Raum für wenigstens eine Autonavigation wenigstens einer bewegbaren Komponente durch den Raum (R) an einer Maschine (100), die eine Spritzgießmaschine zur Verarbeitung von Kunststoffen und anderer plastifizierbarer Massen oder eine 3D-Druckmaschine ist, die zur Entnahme, Umsetzung und/oder Ablage eines Formteils eingerichtet ist, umfassend die Schritte:
a) Bereitstellen wenigstens eines Modells der wenigstens einen bewegbaren Komponente und der Maschine (100) und des Formteils,
b) Erfassen von Geometrieinformationen des Raums (R) und der wenigstens einen bewegbaren Komponente und der Maschine (100) und des Formteils,
c) Bestimmen einer aktuellen Lage der wenigstens einen bewegbaren Komponente und der Maschine (100) und des Formteils im Raum (R),
d) in Beziehung setzen der Geometrieinformationen und der aktuellen Lage der wenigstens einen bewegbaren Komponente sowie der Maschine (100) und des Formteils im Raum (R) zueinander zur Erzeugung wenigstens eines Graphen (10) des Raums (R),
e) Berechnen des Pfades (12) unter Anwendung wenigstens eines Algorithmus auf den Graphen (10), wobei für das Berechnen des Pfades (12) zusätzlich wenigstens eine Optimierung durchgeführt wird,
f) Durchführen wenigstens einer Kollisionsprüfung entlang des Pfades (12) zwischen
1. der wenigstens einen bewegbaren Komponente
2. der Maschine (100) und
3. des Formteils,
g) kollisionsfreies Autonavigieren der wenigstens einen bewegbaren Komponente entlang des Pfades (12),
**dadurch gekennzeichnet, dass** sich die wenigstens eine bewegbare Komponente relativ zu der Maschine bewegt und der Algorithmus unter dynamischer Änderung des Graphen (10) infolge von Bewegungen der wenigstens einen bewegbaren Komponente und/oder der Maschine (100) und/oder des Formteils angewandt wird und wobei das Verfahren bei einer Änderung im Produktionsablauf in Echtzeit simuliert wird und der Algorithmus auf veränderte Positionen und/oder Geschwindigkeiten der wenigstens einen bewegbaren Komponente und/oder der Maschine (100) und/oder des Formteils reagiert, indem wenigstens eine weitere Kollisionsprüfung durchgeführt und wenigstens ein neuer Pfad (12) berechnet wird und der Algorithmus erneut angewandt wird, wobei als Startpunkt eine aktuelle Istposition verwendet wird, wobei die Berechnung, die Kollisionsprüfung und das Autonavigieren vorausschauend erfolgen.

2. Verfahren nach Anspruch 1, **gekennzeichnet durch** das Bereitstellen jeweils wenigstens eines Kontaktpunkts von der wenigstens einen bewegbaren Komponente und der Maschine (100) in Bezug auf eine Lage des wenigstens eines Kontaktpunkts im Raum (R), wobei die Kontaktpunkte miteinander für das Bereitstellen des Modells der wenigstens einen bewegbaren Komponente und der Maschine logisch gekoppelt werden.

3. Verfahren nach Anspruch 2, **dadurch gekennzeichnet, dass** dem wenigstens einen Kontaktpunkt wenigstens eine Liste zugeordnet wird, anhand derer ankoppelbare Modelle beschrieben und/oder aufgelistet werden.

4. Verfahren nach einem der vorhergehenden Ansprüche, **dadurch gekennzeichnet, dass** der Raum (R) in ein Raster aus Würfeln (18) unterteilt wird, welches für die Erzeugung des wenigstens einen Graphen (10) verwendet wird.

5. Verfahren nach einem der vorhergehenden Ansprüche, **dadurch gekennzeichnet, dass** als Algorithmus wenigstens ein Greedy-Search-, ein Dijkstra- und/oder ein A*-Algorithmus mit wenigstens einer offenen Liste verwendet wird.

6. Verfahren nach Anspruch 5, **dadurch gekennzeichnet, dass** als Optimierung wenigstens eine Sprungpunkt-Suche und/oder eine Verwaltung der offenen Liste verwendet wird.

7. Verfahren nach Anspruch 6, **dadurch gekennzeichnet, dass** die Verwaltung der offenen Liste mit einem Binärheap (20) erfolgt.

8. Verfahren nach einem der vorhergehenden Ansprüche, **dadurch gekennzeichnet, dass** das Verfahren vorab simuliert wird und/oder dass wenigstens zwei verschiedene Varianten des Verfahrens simuliert werden und in Bezug auf unterschiedliche Kriterien miteinander verglichen werden.

9. Verfahren nach einem der vorhergehenden Ansprüche, **dadurch gekennzeichnet, dass** der Graph und/oder das Modell der wenigstens einen bewegbaren Komponente und/oder der Maschine (100) und/oder des Formteils grafisch dargestellt wird.

10. Maschinensteuerung für eine Maschine (100), die eine Spritzgießmaschine zur Verarbeitung von Kunststoffen und anderer plastifizierbarer Massen oder eine 3D-Druckmaschine ist, **dadurch gekennzeichnet, dass** die Maschinensteuerung eingerichtet, ausgeführt und/oder konstruiert ist, um das Verfahren nach einem der Ansprüche 1 bis 9 auszuführen.

11. Computerprogrammprodukt mit einem Programmcode, der auf einem Computer lesbaren Medium gespeichert ist, gekennzeichnet zur Durchführung eines Verfahrens nach einem der Ansprüche 1 bis 9.

## Claims

1. A method for determining at least a part of a path (12) for connecting at least one starting point (14) to at least one finishing point (16) in a space for at least one autonavigation of at least one movable component through the space (R) on a machine (100), which is an injection molding machine for processing plastics and other plasticizable materials or a 3D printing machine, configured for removing, transferring and/or depositing a molding, comprising the steps of:
a) providing at least one model of the at least one movable component and the machine (100) and the molding,
b) gathering geometry information of the space (R) and the at least one movable component and the machine (100) and the molding,
c) determining a current position of the at least one movable component and the machine (100) and the molding in the space (R),
d) bringing the geometry information and the current position of the at least one movable component and of the machine (100) and of the molding in the space (R) into relation with one another to generate at least one graph (10) of the space (R),
e) calculating the path (12) by applying at least one algorithm to the graph (10), wherein at least one optimization is additionally carried out for calculating the path (12),
f) performing at least one collision check along the path (12) between
1. the at least one movable component,
2. the machine (100) and
3. the molding,
g) autonavigating in collision-free manner the at least one movable component along the path (12),
**characterized in that** the at least one movable component moves relative to the machine and the algorithm is applied while dynamically changing the graph (10) as a result of movements of the at least one movable component and/or the machine (100) and/or the molding, and wherein the method is simulated in real time in the event of a change in the production sequence and the algorithm reacts to changed positions and/or speeds of the at least one movable component and/or the machine (100) and/or the molding by carrying out at least one further collision check and by calculating at least one new path (12) and applying the algorithm again, using a current actual position as the starting point, wherein the calculation, collision check and autonavigation are performed predictively.

2. A method in accordance with claim 1, **characterized by** providing at least one contact point each of the at least one movable component and the machine (100) with respect to a position of the at least one contact point in the space (R), wherein the contact points are logically coupled to one another for providing the model of the at least one movable component and the machine.

3. A method in accordance with claim 2, **characterized in that** at least one list is associated with the at least one contact point, on the basis of which list couplable models are described and/or listed.

4. A method in accordance with any of the preceding claims, **characterized in that** the space (R) is divided into a grid of cubes (18) which is used for generating the at least one graph (10).

5. A method in accordance with any of the preceding claims, **characterized in that** at least one Greedy Search, Dijkstra and/or A* algorithm with at least one open list is used as the algorithm.

6. A method in accordance with claim 5, **characterized in that** at least one jump point search and/or open list management is used as an optimization.

7. A method in accordance with claim 6, **characterized in that** the open list is managed with a binary heap (20).

8. A method in accordance with any of the preceding claims, **characterized in that** the method is simulated in advance and/or **in that** at least two different variants of the method are simulated and compared with one another with respect to different criteria.

9. A method in accordance with any of the preceding claims, **characterized in that** the graph and/or the model of the at least one movable component and/or the machine (100) and/or the molding is represented graphically.

10. A machine control for a machine (100), which is an injection molding machine for processing plastics and other plasticizable materials or a 3D printing machine, **characterized in that** the machine control is configured, set up and/or constructed to carry out the method in accordance with any of claims 1 to 9.

11. A computer-program product comprising a program code stored on a computer-readable medium for carrying out a method in accordance with any of claims 1 to 9.

## Revendications

1. Procédé de détermination d'au moins une partie d'une trajectoire (12) pour relier au moins un point de départ (14) à au moins un point de destination (16) dans un espace pour au moins une navigation autonome d'au moins un composant mobile à travers l'espace (R) au niveau d'une machine (100) qui est une machine de moulage par injection pour la fabrication de matières plastiques et d'autres masses plastifiables ou une machine pour l'impression 3D, qui est configurée pour l'enlèvement, la transformation et/ou le rangement d'une pièce moulée, comprenant les étapes suivantes :
a) mise à disposition d'au moins un modèle du ou des composant(s) mobile(s) et de la machine (100) et de la pièce moulée,
b) saisie des informations de géométrie de l'espace (R) et du ou des composant(s) mobile(s) et de la machine (100) et de la pièce moulée ;
c) détermination d'une position courante du ou des composant(s) mobile(s) et de la machine (100) et de la pièce moulée dans l'espace (R),
d) mise en relation des informations de géométrie et de la position courante du ou des composant(s) mobile(s) ainsi que de la machine (100) et de la pièce moulée dans l'espace (R) les uns par rapport aux autres pour la production d'au moins un graphique (10) représentant l'espace (R),
e) calcul de la trajectoire (12) en utilisant au moins un algorithme sur le graphique (10), au moins une optimisation étant effectuée en plus pour le calcul de la trajectoire (12),
f) réalisation d'au moins un examen de collision le long de la trajectoire (12) entre :
1. le ou les composant(s) mobile(s)
2. la machine (100) et
3. la pièce moulée,
g) navigation autonome sans collision du ou des composant(s) mobile(s) le long de la trajectoire (12),
**caractérisé en ce que** le ou les composant(s) mobile(s) se déplace(nt) relativement à la machine et l'algorithme est utilisé avec un changement dynamique du graphique (10) suite aux déplacements du ou des composant(s) mobile(s) et/ou de la machine (100) et/ou de la pièce moulée, le procédé étant simulé en temps réel en cas de changement du déroulement de la production et l'algorithme réagissant aux positions et/ou vitesses changées du ou des composant(s) mobile(s) et/ou de la machine (100) et/ou de la pièce moulée, pendant qu'au moins un examen de collision supplémentaire est exécuté et au moins une nouvelle trajectoire (12) est calculée et que l'algorithme est à nouveau utilisé, la position courante étant utilisée comme point de départ, le calcul, l'examen de collision et la navigation autonome se poursuivant de manière anticipée.

2. Procédé selon la revendication 1, **caractérisé par** la mise à disposition à chaque fois d'au moins un point de contact du ou des composant(s) mobile(s) et de la machine (100) par rapport à une position du ou des point(s) de contact dans l'espace (R), les points de contact étant couplés logiquement les uns aux autres pour la mise à disposition du modèle du ou des composant(s) mobile(s) et de la machine.

3. Procédé selon la revendication 2, **caractérisé en ce qu'**au moins une liste est associée au(x) point(s) de contact, à l'aide de laquelle des modèles pouvant être couplés sont décrits et/ou listés.

4. Procédé selon l'une des revendications précédentes, **caractérisé en ce que** l'espace (R) est divisé en une grille de cubes (18), laquelle est utilisée pour la production du ou des graphique(s) (10).

5. Procédé selon l'une des revendications précédentes, **caractérisé en ce qu'**au moins un algorithme Greedy-Search, Dijstra et/ou A* avec au moins liste ouverte est utilisé comme algorithme.

6. Procédé selon la revendication 5, **caractérisé en ce qu'**au moins une recherche de point de saut et/ou une administration de la liste ouverte est utilisée comme optimisation.

7. Procédé selon la revendication 6, **caractérisé en ce que** l'administration de la liste ouverte s'effectue avec un empilement binaire (20).

8. Procédé selon l'une des revendications précédentes, **caractérisé en ce que** le procédé est préalablement simulé et/ou **en ce qu'**au moins deux variantes différentes du procédé sont simulées et comparées l'une à l'autre sur la base de différents critères.

9. Procédé selon l'une des revendications précédentes, **caractérisé en ce que** le graphique et/ou le modèle du ou des composant(s) mobile(s) et/ou de la machine (100) et/ou de la pièce moulée est représenté graphiquement.

10. Commande de machine pour une machine (100) qui est une machine de moulage par injection pour la fabrication de matières plastiques et d'autres masses plastifiables ou une machine pour l'impression 3D, **caractérisée en ce qu'**elle est conçue, configurée et/ou construite pour mettre en oeuvre le procédé selon l'une des revendications 1 à 9.

11. Programme d'ordinateur en tant que produit, comportant un code de programme qui est stocké de manière lisible sur un ordinateur, **caractérisé par** l'exécution du procédé selon l'une des revendications 1 à 9.
